(19) **Europäisches Patentamt / European Patent Office / Office européen des brevets**

(11) **EP 1 862 812 A2**

(12) **EUROPEAN PATENT APPLICATION**

(43) Date of publication:
**05.12.2007 Bulletin 2007/49**

(51) Int Cl.:
**G01S 3/32** (2006.01)

(21) Application number: **07010280.1**

(22) Date of filing: **23.05.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **31.05.2006 US 443737**

(71) Applicant: **HARRIS CORPORATION**
**Melbourne, Florida 32919 (US)**

(72) Inventors:
- **Conn, James K.**
  **Indialantic**
  **Florida 32903 (US)**
- **Offner, James B.**
  **Melbourne**
  **Florida 32934 (US)**
- **Serulneck, Larry P.**
  **Vierra**
  **Florida 32955 (US)**
- **Knick, Earl B.**
  **Melbourne**
  **Florida 32901 (US)**
- **Hash, Ron**
  **Palm Bay**
  **Florida 32907 (US)**
- **Lee, Ying-Ming**
  **Melbourne**
  **Florida 32940 (US)**
- **Denney, Pete**
  **Melbourne Beach**
  **Florida 32951 (US)**
- **Elam, Joseph A.**
  **Palm Bay**
  **Florida 32907 (US)**
- **Smith, Brian A.**
  **Melbourne**
  **Florida 32940 (US)**

(74) Representative: **Schmidt, Steffen J.**
**Wuesthoff & Wuesthoff,**
**Patent- und Rechtsanwälte,**
**Schweigerstrasse 2**
**81541 München (DE)**

(54) **Pseudomonopulse tracking system with variable coupler and integrated LNA**

(57) System for dynamically tracking a position of a target with an antenna in a communication system. The system includes an antenna system (410) configured for generating a sum and difference antenna pattern (201-1, 201-2). A sum RF channel (401) is coupled to a sum channel output of the antenna system. A difference RF channel (402) is coupled to a difference channel output of the antenna system. An RF coupler (422-1) is provided that has a first input coupled to the sum RF channel and a second input coupled to the RF difference channel. One or more coupling control devices (418-1, 418-2) selectively vary an effective coupling value as between the difference channel and the sum channel. An antenna tracking error signal is generated at an output of the coupler.

Fig. 4

**Description**

The invention concerns pseudomonopulse tracking systems, and more particularly, tracking systems that help improve tracking performance and optimize bit error rates.

Many types of RF communication systems utilize directional antennas. While directional antennas offer numerous advantages, they generally must be pointed toward a remote transceiver station in order to achieve maximum communication efficiency. For example, pointing the directional antenna toward a remote transceiver station allows the communication system to achieve the best possible signal to noise value for the radio link and permits optimization of various other communication parameters such as bit-error-rate. Where the remote transceiver station is a moving target, such as a satellite, some method must be provided to continuously ensure that the directional antenna is pointed in the right direction.

In order to solve the foregoing problem, many systems use what is known as pseudo-monopulse tracking. Pseudo-monopulse tracking systems are those in which tracking of the signal source is accomplished by comparing signals received through overlapping patterns or lobes of the receiver antenna. The comparison helps to determine any discrepancy between the pointing direction of the antenna and the actual direction of the signal source. Any discrepancy is reduced to pointing error signals used for correcting the pointing direction of the antenna. Pseudo-monopulse tracking is typically implemented by means of a tracking coupler inserted between the antenna system feed and the first low noise amplifier used in the RF receiving chain. The coupling value is conventionally established as part of the system design and is generally a compromise value. In particular, the coupling value must be selected so that it maximizes the pointing error signal while achieving a bit error rate (BER) that is as low as possible.

Generally, BER is a function of the signal to noise ratio, which depends in part on the coupling value selected for the tracking coupler. The signal that is coupled from the difference channel to the sum channel will increase the noise level in the sum channel, thereby degrading system performance. Decreasing the coupling level will decrease the amount of noise on the sum channel, resulting in improved signal to noise values and improved BER performance. Conversely, tracking performance is a function of the modulation slope of the tracking error signal, which also is dependent on the coupler value. Increasing the coupling level increases tracking performance. Accordingly, conventional systems must generally settle for a coupler value that is a trade-off based on these two competing performance goals.

Those skilled in the art will also appreciate that the presence of any lossy components located in the receive signal path ahead of the first low-noise amplifier can degrade receiver performance. It is well known that any loss introduced at this stage can degrade the receiver sensitivity and noise figure. Still, there is a need in pseudo-monopulse tracking systems to maintain precise control over the relative amplitude and phase between the sum and difference channel. Accordingly, while such an arrangement can degrade receiver performance, conventional systems have typically placed the tracking coupler in the receiver front end, prior to the first low-noise amplifier stage.

The invention concerns a system for dynamically tracking the position of a transmitter with an antenna in a communication system. The system includes an antenna system configured for generating a sum and difference antenna pattern. A sum RF signal is coupled to a sum channel output of the antenna system. A difference RF signal is coupled to a difference channel output of the antenna system. A phase transfer characteristic of the sum RF channel is advantageously matched to a phase transfer characteristic of the difference channel.

An RF coupler is provided that has a first input coupled to the sum RF channel and a second input coupled to the RF difference channel. One or more coupling control devices are also provided. According to one aspect of the invention, a coupling control device is disposed in the difference RF channel. However, a coupling control device can also be provided in the sum RF channel. The one or more coupling control devices are configured to selectively vary the coupling value between the difference channel and the sum channel. A scanner device is also provided. The scanner device is configured for scanning a beam of the antenna system about a boresight axis of the antenna. As a result, an antenna tracking error signal is generated at an output of the coupler.

According to one aspect of the invention, the coupling control device is comprised of a variable RF attenuator. For example, the attenuator can be provided in the signal processing chain defined by the difference RF channel. An output of the attenuator is coupled to an input of the RF coupler. In order to ensure that such attenuation does not have a negative effect on the signal to noise value, a low-noise amplifier can be provided at the front end of the receiver in each of the sum channel and the difference channel. More particularly, a sum channel low-noise amplifier is coupled to a sum channel output of the antenna system, and a difference channel low-noise amplifier is coupled to a difference channel output of the antenna system.

The system also includes a tracking control system operatively coupled to the coupling control device. The tracking control system can be programmed for automatically dynamically varying the coupling value to optimize a bit-error-rate. For example, the tracking control system can be programmed to selectively increase an amount of coupling from the difference channel to the sum channel signal during a target acquisition period. Such acquisition period refers to a period of time during which it is not known if the antenna is pointing precisely in the direction of the target. Later, during a communication session occurring after the target has been acquired, the coupling can be decreased to reduce the amount of noise introduced into the sum channel from the difference channel. This can occur during a portion of a communication session after the target transceiver has been initially located.

Advantageously, an RF switch can be disposed in the difference channel at an input to the RF coupler. The RF switch is responsive to the tracking control system for decoupling the difference channel from the sum channel during at least a portion of a communication session. For example, the RF switch can be positioned to decouple the difference RF channel from the sum RF channel during a period occurring after data communications have already been established. Usually this will occur after an acquisition period during which it is not known if the antenna is precisely pointing toward the target transceiver.

The invention also includes a method for dynamically tracking a position of a target with an antenna in a communication system. The method includes generating a sum channel signal and a difference channel signal from a signal received at an antenna system. A phase transfer characteristic of the sum RF channel and the difference RF channel are advantageously matched to one another. A portion of the difference channel signal is coupled to the sum channel signal in accordance with a coupling value. A beam of the antenna system is scanned about a boresight axis of the antenna to generate an antenna tracking error signal. The coupling value can be varied automatically and dynamically over time to improve system performance. For example, the coupling value can be automatically dynamically varied to optimize a bit-error-rate of the system and/or to improve target acquisition performance. According to one aspect of the invention, the coupling value is dynamically varied automatically in response to a control signal from a tracking control system.

According to another aspect of the invention, the coupling value can be varied by selectively varying the amount of attenuation applied to signals in the difference channel. The attenuation is advantageously inserted into the difference channel prior to coupling the difference channel to the sum channel. In order to minimize any unwanted increase in the signal-to-noise ratio, a low-noise amplifier can be included in each of the sum and difference channels prior to the coupling step. The method further includes selectively increasing an amount of coupling from the difference channel to the sum channel signal during an acquisition period. During this period when a position of the target is initially being determined, a higher coupling level can provide improved acquisition performance. By comparison, a lower coupling value can be used during a communication session occurring after the acquisition period. Such lower coupling can improve a signal to noise ratio during these periods.

According to another aspect of the invention, the difference channel can be entirely decoupled from the sum channel during at least a portion of a communication session. For example, this decoupling can occur when data is being received on the sum channel and the system is not performing the target tracking function. The decoupling step includes controlling an RF switch used to route the difference channel to the coupler.

Embodiments will be described with reference to the following drawing figures, in which like numerals represent like items throughout the figures, and in which:

FIG. 1 is a block diagram of a pseudo-monopulse antenna tracking system of the prior art.
FIG. 2 is a plot showing sum and difference antenna patterns that can be generated by the feed and combiner in FIG. 1.
FIG. 3 is a plot showing a sum beam squinted to the left and the right of boresight.
Fig. 4 is a block diagram showing a pseudo-monopulse antenna tracking system that is useful for understanding the invention.
FIG. 5 is a block diagram of an alternative embodiment of the pseudo-monopulse antenna tracking system in FIG. 4.

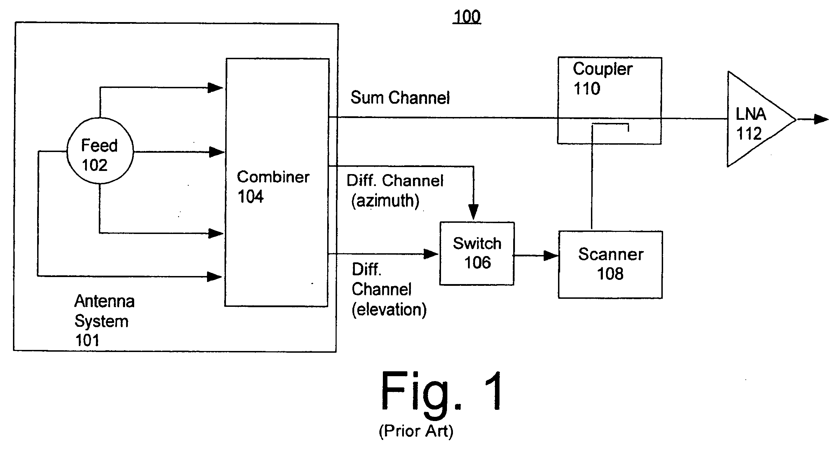

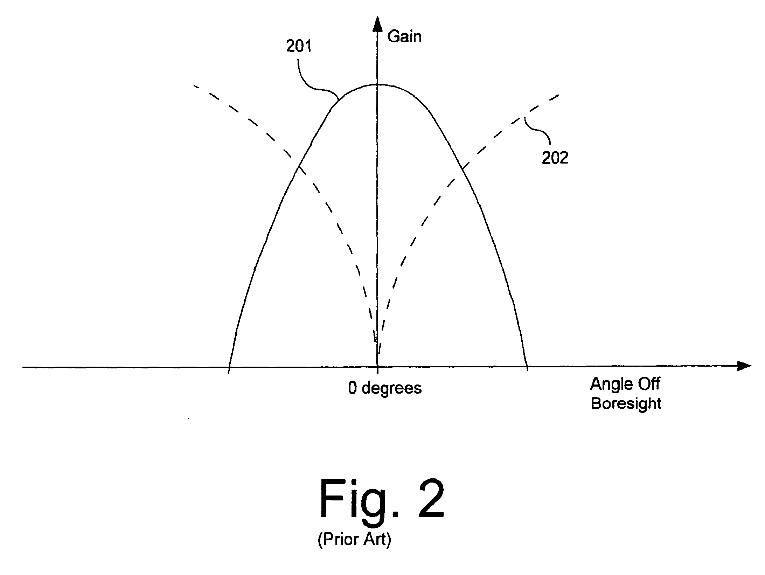

FIG. 1 is a block diagram that shows a conventional pseudo-monopulse antenna tracking (PMAT) system. The PMAT system 100 includes a conventional antenna system 101 comprised of a feed 102 and a combiner 104. Those skilled in the art will readily appreciate that the feed 102 and the combiner 104 can be selected to operate cooperatively to produce sum and difference antenna channels as shown in FIG. 2. The sum and difference antenna channels are conventionally associated with certain types of well known antenna patterns which are substantially as shown in FIG. 2. Various combinations of feeds 102 and combiners 104 are known in the art for the purpose of generating sum and difference antenna patterns as described herein. The exact nature of the feed 102 will depend on the type of antenna (not shown). Combiner 104 typically includes one or more conventional hybrid junctions used for RF dividing and combining functions. Those skilled in the art will appreciate that the particular type of combiner 104 used in a particular instance will depend on a variety of factors, including the type of antenna selected and feed that are used. Further, it will be appreciated that the antenna system 101 can generate a difference channel representing a difference antenna pattern in an azimuthal plane and a second difference pattern aligned in the plane of elevation for the antenna.

Referring again to FIG. 1, it can be observed that the sum channel and difference channel are each communicated to a coupler 110, where a portion of a received signal in the difference channel can be coupled to the received signal in the sum channel. The value of the coupler will be fixed. The actual amount of coupling will be selected by a system designer and will depend on a number of factors. Typical coupling values for these types of system can range between 6dB and 16dB. Regardless of the specific coupler selected, combining the sum and difference channel beams in this way results in a squinting of the sum channel beam at some angle slightly displaced from boresight. In other words, when the sum channel signal is measured at the output of the coupler 110, the peak gain of the sum channel appears offset slightly from boresight when the difference channel is coupled to the sum channel. The extent of the angular displacement will depend on the amount of coupling.

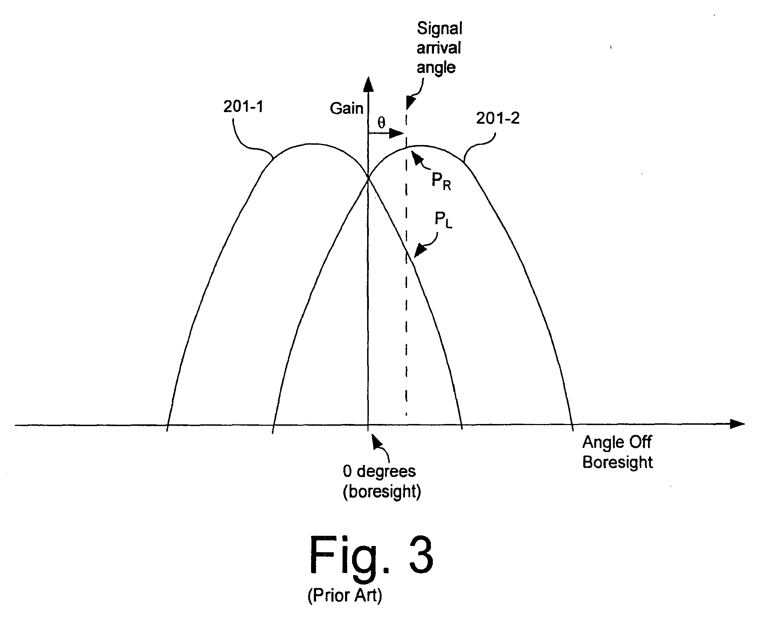

A scanner 108 is used to control the squint direction relative to boresight. Typically, the scanner 108 will be comprised of a variable phase shifting device. For example, the scanner 108 can be selectively controlled to quickly vary the phase between two positions defined as a 0° phase shift and 180° phase shift. Switching the scanner between these two positions results in the two sum channel antenna patterns 201-1, 201-2 shown in Fig. 3 at the output of coupler 110.

Referring now to Fig. 3, it can be observed that a signal arriving at some angle θ will be received in beam 201-1 at a power level $P_R$. In contrast, the same signal will be received in beam 201-2 at a power level $P_L$. It will be appreciated that in FIG. 3, the relative difference in received power or the ratio between the two power levels $P_R$ and $P_L$ can be used to generate an error signal that uniquely defines the angle θ. For example, the tracking error signal can be defined as follows:

$$\text{Tracking Error Signal} = \hat{e} = \frac{\hat{P}_R - \hat{P}_L}{\hat{P}_R + \hat{P}_L}$$

where $\hat{P}_R$ and $\hat{P}_L$ are the estimated values of $P_R$ and $P_L$, respectively. The value of $P_R$ and $P_L$ can be measured during the occurrence of a single pulse to minimize the effect of any variations in the transmission path. The output of coupler 110 can be provided to a low-noise amplifier 112 to provide some signal gain. Thereafter, the signal can be coupled to a tracking control system where the tracking error can be calculated. Thereafter the tracking error signal is used in a look-up-table to determine a value for θ. Once this error angle is determined, it can be used to modify a position of an antenna to compensate for the angle θ, thereby ensuring that antenna boresight is pointed directly at the target.

Thus far, the conventional pseudo-monopulse tracking system in FIG. 1 has been described with respect to a single difference channel. A single difference channel can be satisfactory for tracking a target in a single plane. In practice, however, it is common to provide a difference channel output from combiner 104 aligned in the azimuth and elevation planes. As shown in FIG. 1, an RF switch 106 can be used to selectively determine which of these two difference channel signals are communicated to the scanner 108. The two difference channels can be used in the manner previously described herein to produce a tracking error signal for the antenna azimuth and elevation.

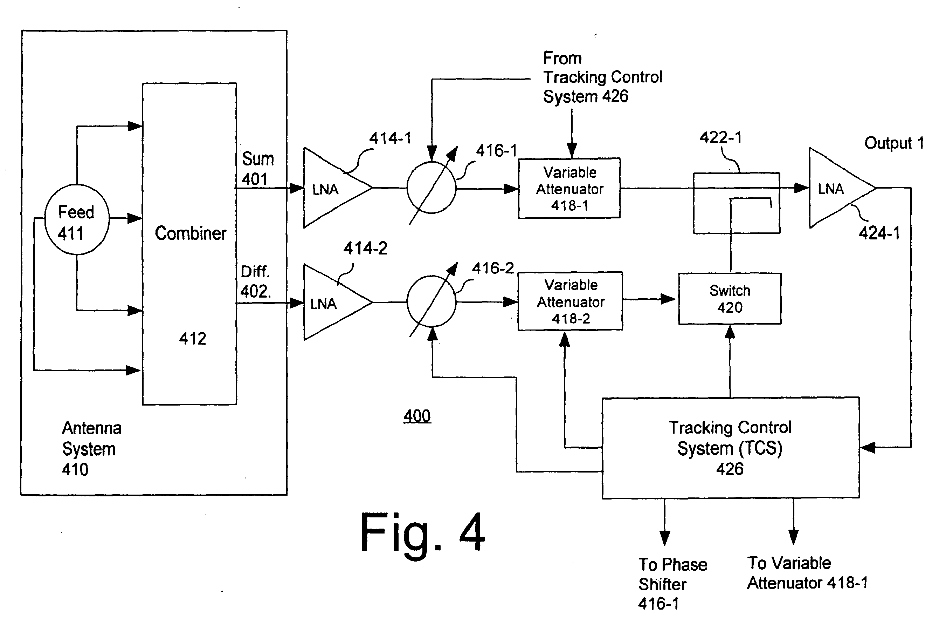

Referring now to FIG. 4, a pseudo-monopulse tracking system is provided in which the relative coupling of a signal from the difference channel to the sum channel can be selectively controlled. As shall be hereinafter disclosed, the variable coupling can be used to optimize antenna tracking performance without degrading BER performance. It should be understood that any suitable arrangement can be used to implement such a variable coupling, FIG. 4 being merely one possible implementation of such a system.

In FIG. 4, a conventional antenna system 410 can be provided which includes a feed 411 and a combiner 412 as described above. The antenna system 410 can generate a sum channel output and a difference channel output similar to those discussed in relation to FIG. 2. These antenna system outputs can be coupled to a sum RF channel 401 and a difference RF channel 402. In contrast to the conventional tracking system described in relation to FIG. 1, a pair of low-noise amplifiers (LNA) 414-1, 414-2 can be provided to the sum and difference outputs of the antenna system 410. The low-noise amplifier 414-2 is coupled to phase shifter 416-2. Phase shifter 416-2 can serve as a scanner for the antenna beam using techniques similar to those previously described in relation to FIGS. 1-3. Accordingly, in one embodiment phase shifter 416-2 can be toggled between a phase shift of 0° and 180°. Although not necessarily required, phase shifter 416-1 can also be provided. Those skilled in the art will appreciate that the scanner function can also be implemented using phase shifter 416-1 to place the sum channel signal 180° out of phase with the difference channel. Alternatively, the phase shifter 416-1 can be used simply for phase tracking consistency as between the sum and difference channels 401, 402.

In FIG. 4, coupler 422-1 is used to couple a portion of a signal received on the difference channel 402 with the signal received on the sum channel 401. In the embodiment of the invention shown in FIG. 4, the coupler 422-1 has a fixed coupling value. For example, the coupling value can be selected in the range from between about 6dB to about 20dB without limitation. Advantageously, a variable attenuator 418-2 is provided for selectively varying a power level of the signal received at the input of the coupler. This variation in attenuation can effectively be used to vary the actual amount of signal coupled from the difference channel 402 to the sum channel 401. More attenuation will decrease the amount of apparent coupling from difference channel 402 to sum channel 401. Conversely, less attenuation will appear to increase the effective amount of coupling. Accordingly, the variable attenuator 418-2 can serve as a coupling control device.

Variable attenuator 418-1 is not required. However, the variable attenuator 418-1 can optionally be provided to maintain phase tracking consistency as between the sum and difference channels 401, 402. According to another embodiment, the variable attenuator 418-1 can be used in a manner similar to variable attenuator 418-2 to vary an apparent amount of coupling from the sum to the difference channel. Increasing the attenuation of variable attenuator 418-1 creates an apparent or relative increase in the power level of the signal coupled from the difference channel 402 as compared to received signal in the sum channel 401. Significantly, since such attenuation is introduced after the signal has already been amplified in the low-noise amplifiers 414-1, 414-2, the additional attenuation does not have a significant effect on receiver performance. Of course, it will be appreciated that the invention is not limited to the precise arrangement shown in FIG. 4. Any other arrangement could be used for achieving the foregoing results, provided that relative coupling from the difference channel to the sum channel can be selectively varied. All such arrangements are contemplated within the scope of the present invention.

Referring again to FIG. 4, it will be observed that a switch 420 can be provided. The switch 420 can be used to entirely decouple the difference channel from the sum channel. For example, it can be desirable to decouple the difference channel from the sum channel during those periods when the system is receiving data and not attempting to perform antenna tracking measurements. Completely decoupling the difference channel from the sum channel in this way can improve the signal-to-noise ratio in the sum channel, which in turn can improve the bit error rate (BER).

Notably, the arrangement described in relation to FIG. 4 is facilitated by placement of the low-noise amplifiers 414-1, 414-2 immediately following the antenna system combiner. The provision of some gain prior the passive elements means that somewhat more loss can be tolerated in passive elements, such as phase shifters 416-1, 416-2, and variable attenuators 418-1, 418-2 without sacrificing receiver performance. This allows greater flexibility in the selection of components. For example, rather than using expensive ferrite type phase shifters, as are commonly called for when implementing the system shown in FIG. 1, less expensive types of phase shifters can be used. For example, PIN diode type phase shifters can be used in the embodiment shown in Fig. 4, because the higher loss of such devices can be tolerated without degrading receiver performance. Another advantage is that faster phase shifters can be used. High speed ferrite type phase shifters can be difficult to implement and very expensive. PIN diode phase shifters can change phase shift much more quickly and are less expensive.

Moving the coupler to a point following the low-noise amplifiers 414-1, 414-2 has a further advantage in that it allows a variable attenuator to be used in the RF processing chains for implementing the variable coupling function, without degrading receiver performance. Accordingly, the variable coupling effect can be achieved in a simple and cost effective manner.

Referring again to Fig. 4, the tracking control system (TCS) 426 can be used to control the pseudo-monopulse tracking function. The TCS can be implemented in any suitable manner. For example a controller or dedicated microprocessor can be used for this purpose. Alternatively, the TCS can be implemented as part of the programming of a microprocessor provided for a receiver in which the pseudo-monopulse tracking system 400 is implemented. The invention is not limited in this regard and any suitable arrangement can be used.

Those skilled in the art will appreciate that BER is a function of the signal to noise value, which depends in part on the coupling value selected for the tracking coupler. The signal that is coupled from the difference channel to the sum channel will increase the noise level in the sum channel, thereby degrading system performance. Decreasing the coupling level will decrease the amount of noise on the sum channel, resulting in improved signal to noise values and improved BER performance. Conversely, tracking performance is a function of the modulation slope of the tracking error signal, which also is dependent on the coupler value. A larger modulation slope will provide a larger error signal. Accordingly, increasing the coupling level increases tracking performance by producing a larger variation in error signal per degree of error. Conventional systems must generally settle for a coupler value that is a trade-off based on these two competing performance goals.

In contrast, the TCS 426 can control the operation of the phase shifters 416-1, 416-2, variable attenuators 418-1, 418-2, and the switch 420 for optimum tracking and BER performance. For example, when a target is initially being acquired, the TCS 426 can advantageously control the variable attenuator 418-2 so that it applies a minimal amount of attenuation to the difference channel. This can increase the apparent amount of coupling from the difference channel 402 to the sum channel 401, thereby increasing the modulation slope and tracking performance. In particular, more coupling will increase the modulation slope of a tracking error signal, thereby improving tracking performance.

Conversely, after the target has been acquired and the antenna boresight is substantially aligned in the direction of a target, the apparent amount of coupling from the difference channel to the sum channel can be decreased. This will degrade tracking performance somewhat because it will reduce the modulation slope of the tracking error signal. However, it will improve the signal to noise ratio on the sum channel because less noise will be coupled onto the sum channel from the difference channel. Higher signal to noise ratios can result in higher BERs. The TCS can vary the coupling ratio to achieve optimal performance with respect to antenna tracking and BER in varying conditions. Moreover, RF switch 420 can be controlled by the TCS 426 to entirely decouple the difference channel 402 from the sum channel 401 during periods when target tracking is not being performed but data is being received. This can further improve the signal-to-noise ratio and enhance the BER.

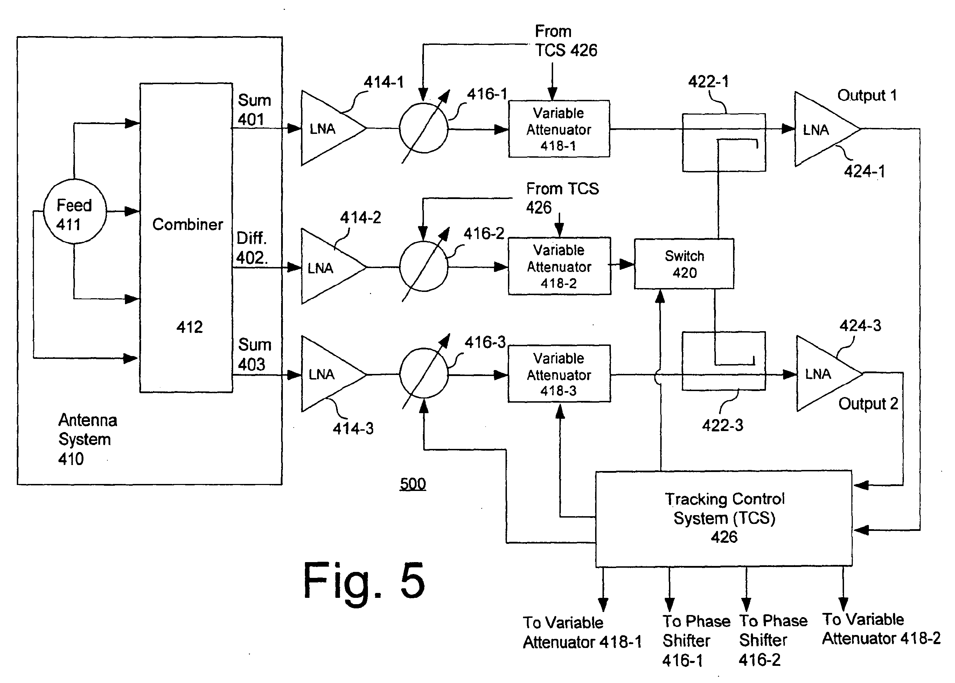

Referring now to FIG. 5, there is shown an alternative embodiment of the pseudo-monopulse tracking system of FIG. 4. The embodiment in FIG. 5 shares many common elements with the system in FIG. 4. However, instead of providing a single sum channel 401, the embodiment in FIG. 5 includes a second sum channel 403. In FIG. 5, sum channel 403 provides a sum antenna pattern with a different polarization as compared to sum channel 401. For example, sum channel 401 can be associated with a feed output for left hand circular polarization signal, and sum channel 403 can be associated with a feed output for right hand circular polarized signal. Phase shifter 416-3 is optional, but can be used to perform functions similar to those previously described in relation to phase shifter 416-1. Likewise, the variable attenuator 418-3 is optional, but can be used to perform functions similar to variable attenuator 418-1. Like sum channel 401, the sum channel 403 also includes a coupler 422-3. Each channel can include a second respective low-noise amplifier 424-1, 424-3.

The system in Fig. 5 operates substantially in the same manner as the system described in relation to Fig. 4. However, in Fig. 5, the pseudo-monopulse tracking system 500 can use switch 420 to route the difference channel to sum channel 401 or sum channel 403. Consequently, the tracking system in Fig. 5 can perform target tracking for signals having right hand and left hand circular polarizations.

All of the system, methods and algorithms disclosed and claimed herein can be made and executed without undue experimentation in light of the present disclosure. While the invention has been described in terms of preferred embodiments, it will be apparent to those of skill in the art that variations may be applied to the system, methods and sequence of steps of the method without departing from the concept, spirit and scope of the invention. More specifically, it will be apparent that certain components may be added to, combined with, or substituted for the components described herein while the same or similar results would be achieved. All such similar substitutes and modifications apparent to those skilled in the art are deemed to be within the spirit, scope and concept of the invention as defined.

## Claims

1. A method for dynamically tracking a position of a target with an antenna in a communication system, comprising:

   generating a sum channel signal and a difference channel signal from a signal received at an antenna system;
   coupling a portion of said difference channel signal to said sum channel signal in accordance with a coupling value;
   selectively varying said coupling value; and
   scanning a beam of said antenna system about a boresight axis of said antenna to generate an antenna tracking error signal.

2. The method according to claim 1, wherein said selectively varying step comprises selectively varying an amount of attenuation applied to signals in said difference channel.

3. The method according to claim 1, further comprising using a low-noise amplifier to apply a predetermined amount of RF gain to signals received in each of said sum channel and said difference channel prior to said coupling step.

4. The method according to claim 1, further selectively increasing an amount of coupling from said difference channel to said sum channel signal during an acquisition period, when a position of said target is initially being determined, as compared to an amount of coupling applied during a communication session occurring after said acquisition period.

5. The method according to claim 1, further comprising decoupling said difference channel from said sum channel during at least a portion of a communication session when data is being received on said sum channel.

6. The method according to claim 1, further comprising dynamically varying said coupling value to optimize a bit-error-rate.

7. System for dynamically tracking a position of a target with an antenna in a communication system, comprising:

   an antenna system configured for generating a sum and difference antenna pattern;
   a sum RF channel coupled to a sum channel output of said antenna system;
   a difference RF channel coupled to a difference channel output of said antenna system;
   an RF coupler having a first input coupled to said sum RF channel and a second input coupled to said RF difference channel;

at least one coupling control device disposed in a signal path defined by at least one of said sum RF channel and said difference RF channel, and configured for selectively varying a coupling value from said difference channel to said sum channel; and

a scanner configured for scanning a beam of said antenna system about a boresight axis of said antenna, wherein an antenna tracking error signal is generated at an output of said coupler.

8. The system according to claim 7, wherein said coupling control device is comprised of a variable RF attenuator.

9. The system according to claim 7, further comprising a tracking control system programmed to selectively increase an amount of coupling from said difference channel to said sum channel signal during an acquisition period, when a position of said target is initially being determined, as compared to an amount of coupling applied during a communication session occurring after said acquisition period.

10. The system according to claim 7, further comprising an RF switch disposed in said difference channel at an input to said coupler, said RF switch responsive to a tracking control system for decoupling said difference channel from said sum channel during at least a portion of a communication session.

**100**

Sum Channel

Coupler
110

LNA
112

Feed
102

Combiner
104

Diff. Channel
(azimuth)

Switch
106

Scanner
108

Diff.
Channel
(elevation)

Antenna
System
101

# Fig. 1

(Prior Art)

EP 1 862 812 A2

8

# Fig. 2
(Prior Art)

# Fig. 3
(Prior Art)

EP 1 862 812 A2

Fig. 4

# Fig. 5